# EUROPÄISCHE PATENTSCHRIFT

(11) **EP 3 910 886 B1**
(45) Veröffentlichungstag und Bekanntmachung des Hinweises auf die Patenterteilung: **26.07.2023**
(21) Anmeldenummer: 20175036.1
(22) Anmeldetag: 15.05.2020
(51) Int. Cl.: H04L 12/40, H04W 88/06

(54) **VORRICHTUNG UND VERFAHREN ZUR DATENÜBERTRAGUNG AUF MEHREREN DATENÜBERTRAGUNGSKANÄLEN**
DEVICE AND METHOD FOR DATA TRANSMISSION ON A PLURALITY OF DATA TRANSMISSION CHANNELS
DISPOSITIF ET PROCÉDÉ DE TRANSMISSION DE DONNÉES SUR UNE PLURALITÉ DE CANAUX DE TRANSMISSION DE DONNÉES

(43) Veröffentlichungstag der Anmeldung: 17.11.2021
(73) Patentinhaber: ise Individuelle Software und Elektronik GmbH, 26122 Oldenburg (DE)
(72) Erfinder: Marks, Henrik, 26131 Oldenburg (DE); Kamenik, Jens, 26133 Oldenburg (Oldb) (DE); Bowenk, Artur, 26209 Hatten- Sandkrug (DE); Klein, Torben, 27798 Hude (Oldenburg) (DE); Sahm, Christoph, 26131 Oldenburg (DE); Gossé, Christian, 67870 Bischoffsheim (DE)
(74) Vertreter: Angerhausen, Christoph

(56) Entgegenhaltungen:
- SALMA OUDJI ET AL: "Radio interference challenges in a multiprotocol compact RF hardware platform for home and building automation applications : RF Interf. Challenges in Compact Multiprotocol H/W platform for HBA", INTERNATIONAL JOURNAL OF COMMUNICATION SYSTEMS., Bd. 31, Nr. 8, 25. Mai 2018 (2018-05-25), Seite e3535, XP055741697, GB ISSN: 1074-5351, DOI: 10.1002/dac.3535
- S. OUDJI ET AL: "Radiofrequency Interconnection between Smart Grid and Smart Meters Using KNX-RF and 2.4 GHz Standard Protocols for Efficient Home Automation Applicati", JOURNAL OF COMMUNICATIONS, 1. Januar 2015 (2015-01-01), XP055741687, FI ISSN: 1796-2021, DOI: 10.12720/jcm.10.10.812-820
- OUDJI S ET AL: "Battery lifetime performances of radiofrequency systems using the ISO standard KNX-RF multi and Bluetooth low energy for home automation applications", 2016 IEEE INTERNATIONAL CONFERENCE ON CONSUMER ELECTRONICS (ICCE), IEEE, 7. Januar 2016 (2016-01-07), Seiten 255-256, XP032880421, DOI: 10.1109/ICCE.2016.7430604 [gefunden am 2016-03-10]

## Beschreibung

### TECHNISCHES GEBIET

Die vorliegende Erfindung ist auf eine Verbesserung in der Übertragung von Daten in Netzwerken gerichtet, insbesondere auf Netzwerke in der Gebäudeautomation. Derartige Netzwerke verknüpfen Sensoren, Aktoren und weitere Netzwerkkomponenten, und ermöglichen eine Kommunikation zwischen diesen Geräten mittels drahtgebundener und drahtloser Verbindungen.

### HINTERGRUND

In der Gebäudeautomation werden Sensoren, Aktoren und weitere Module über Netzwerke miteinander verbunden. Diese Netzwerke vereinigen in der Regel drahtlose und drahtgebundene Übertragungstechniken. Die einzelnen Komponenten solcher Netzwerke können batteriebetrieben sein und sollten daher mit möglichst geringem Energieaufwand betrieben werden. Ein bekannter Standard für solche Netzwerke ist der KNX-Standard. Ausführungsformen der Erfindung sind jedoch nicht auf KNX beschränkt, sondern können allgemein mit beliebigen Netzwerken, insbesondere Funknetzwerken, implementiert werden, die Geräte über parallele Kanäle mit Daten versorgen.

Die Komponenten, hier auch als Teilnehmer bezeichnet, kommunizieren üblicherweise unter Verwendung von Telegrammen. Ein Telegramm ist eine Bitsequenz, die Metadaten und Nutzdaten umfasst. Nutzdaten sind beispielsweise gemessene Daten, die ein Sensor in das Netzwerk überträgt, oder Befehle, die ein Aktor aus dem Netzwerk erhält. Metadaten sind beispielsweise Ziel- oder Herkunftsadressen oder auch Hinweisdaten, mit denen anstehende weitere Telegramme angekündigt werden; solche Metadaten werden auch als Präambeln bezeichnet. Eine Präambel kann aus einer Folge von Blöcken bestehen, hier auch als Info-Blöcke bezeichnet. Jeder dieser Blöcke enthält eine Erkennungsbitfolge, die beispielsweise durch ein Protokoll oder eine jeweilige Installation fest vorgegeben sein kann und vorzugsweise immer gleich lang ist. Innerhalb eines Blocks folgt auf diese Bitfolge üblicherweise ein oder mehrere Adressfelder. Der Block schließt ab mit einer Positionsangabe, die angibt, wie viele solcher Blöcke noch bis zum Ende der Präambel folgen. An die Präambel schließt optional ein Synchronisationsblock sowie die eigentlichen Nutzdaten an.

In bekannten drahtlosen Gebäudenetzwerken, beispielsweise "KNX RF Multi", sind mehrere parallele Funkübertragungskanäle vorgesehen. Die Kanäle können unterschiedliche Datenraten umfassen, beispielsweise Datenraten von 16kbit/s oder 8kbit/s. Alternativ zu solchen technisch bedingten Datenraten können unterschiedliche Datenraten auch dadurch gegeben sein, dass in einem ersten Kanal kürzere Präambeln verwendet werden, die beispielsweise lediglich aus einer Erkennungsbitfolge bestehen. Somit wird durch den ersten Kanal faktisch eine höhere Datenrate erzielt als in einem zweiten Kanal, der längere Präambeln verwendet. Im folgenden werden unter Datenraten immer beide Möglichkeiten, also technisch bedingte oder protokollbedingte, verstanden. Typischerweise werden genau zwei unterschiedliche Datenraten verwendet, jedoch können für jede Datenrate mehrere Kanäle betrieben werden. Die in dem Netzwerk miteinander verbundenen Komponenten können gewöhnlich sowohl die schnelleren als auch die langsameren Kanäle zum Senden verwenden, und verfügen zu diesem Zweck über einen Transceiver oder über separate Sende- und Empfangseinrichtungen. Derartige Komponenten können senden und empfangen, jedoch nicht beides gleichzeitig. Zudem wird zwischen zwei Typen von Komponenten unterschieden: ein erster Typ kann Daten lediglich auf den langsamen Kanälen empfangen, und ein zweiter Typ kann lediglich auf den schnellen Kanälen empfangen.

In SALMA OUDJI ET AL: "Radio interference challenges in a multiprotocol compact RF hardware platform for home and building automation applications: RF Interf. Challenges in Compact Multiprotocol H/W platform for HBA", INTERNATIONAL JOURNAL OF COMMUNICATION SYSTEMS, Bd. 31, Nr. 8, 25. Mai 2018, ist die Verwendung von Kanälen im KNX-Multistandard offenbart. Unterschiedliche Frequenzen dieser Kanäle werden verwendet.

In S. OUDJI ET AL: "Radiofrequency Interconnection between Smart Grid and Smart Meters Using KNX-RF and 2.4 GHz Standard Protocols for Efficient Home Automation Applications", JOURNAL OF COMMUNICATIONS, 1. Januar 2015, ist die Verwendung von KNX-Protokollen in einem Netzwerk unter Verwendung mehrerer Kanäle offenbart. Wird der Erhalt einer Nachricht nicht bestätigt, sendet eine Vorrichtung die Nachricht erneut, wobei sie einen anderen Kanal verwendet.

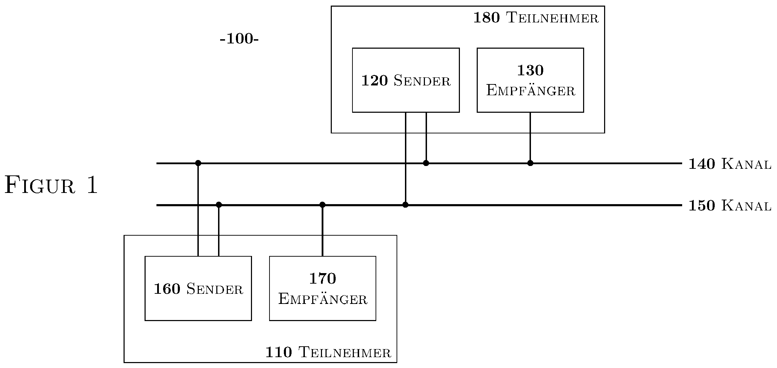

Figur 1 zeigt einen Ausschnitt aus einem beispielhaften Netzwerk 100. Die beiden Kanäle 140 und 150 sind Funkkanäle mit unterschiedlicher Datenrate. Beispielsweise überträgt der Kanal 140 mit einer höheren Datenrate als der Kanal 150. Jeder der Kanäle steht stellvertretend für einen oder mehrere Kanäle der gleichen Datenrate. Zwei Teilnehmer 110 und 180 sind mit den Kanälen 140 und 150 verbunden. Ein Teilnehmer ist ein Gerät, das zur Kommunikation in dem Netzwerk geeignet ist, beispielsweise indem es in der Lage ist, Daten in einem Protokoll des Netzwerks zu empfangen und zu senden. Beispiele für solche Teilnehmer sind Sensoren oder Aktoren in einem Gebäudenetzwerk. Jeder der Teilnehmer verfügt über einen Sender 120 beziehungsweise 160 und einen Empfänger 130 beziehungsweise 170. Sender 120 beziehungsweise 160 und Empfänger 130 beziehungsweise 170 können, wie gezeigt, als separate Einrichtungen oder alternativ als eine Einheit (Transceiver) implementiert sein. Jeder der Teilnehmer 110 und 180 steht stellvertretend für einen oder mehrere Teilnehmer der gleichen Konfiguration. Die Sender 120 und 160 beider Teilnehmer 110 und 180 sind in der Lage, auf jedem der Kanäle 140 und 150 zu senden, was durch direkte Verbindungen mit diesen Kanälen illustriert wird. Jedoch ist der Empfänger 130 des Teilnehmers 180 ausschließlich in der Lage, von Kanal 140 Daten zu empfangen, also beispielsweise ausschließlich Daten, die mit der höheren Datenrate übertragen werden. Der Empfänger 170 des Teilnehmers 110 ist in der Lage, Daten ausschließlich über den Kanal 150 zu empfangen, also beispielsweise Daten, die mit der niedrigeren Datenrate übertragen werden.

### ZUSAMMENFASSUNG

Ausführungsformen der Erfindung betreffen eine Vorrichtung, umfassend: einen Transceiver, der eingerichtet ist, in einem ersten Modus auf einem ersten Übertragungskanal eine erste Bitsequenz mit einer ersten Übertragungsdauer zu senden und in einem zweiten Modus auf einem zweiten Übertragungskanal eine oder mehrere zweite Bitsequenzen einer zweiten Übertragungsdauer zu empfangen, wobei die erste Bitsequenz mit einer Erkennungsbitfolge und mehreren gleich langen Blöcken beginnt, die je einen Zählwert enthalten, der mit jedem Block dekrementiert wird; wobei der Transceiver ferner eingerichtet ist, das Senden der ersten Bitsequenz in dem ersten Modus in regelmäßigem Abstand zu unterbrechen und jeweils in den zweiten Modus zu schalten und in dem zweiten Modus zu prüfen, ob auf dem zweiten Übertragungskanal eine zweite Bitsequenz übertragen wird; wobei der Abstand zwischen zwei aufeinanderfolgenden Unterbrechungen kleiner ist als die zweite Übertragungsdauer; und wobei die Vorrichtung, falls auf dem zweiten Übertragungskanal eine zweite Bitsequenz übertragen wird, diese vollständig liest und anschließend mit dem Senden der ersten Bitsequenz auf dem ersten Übertragungskanal unter Weglassen derjenigen Blöcke fortfährt, die während der Unterbreczhnung fällig gewesen wären.

Weitere Ausführungsformen werden durch die beigefügten Ansprüche definiert.

### KURZE BESCHREIBUNG DER FIGUREN

Figur 1 zeigt ein beispielhaftes Netzwerk.
Figur 2 zeigt erfindungsgemäßes Senden und Empfangen von Daten in jeweiligen Übertragungskanälen.
Figur 3 zeigt ein erfindungsgemäßes Verfahren.

### AUSFÜHRLICHE BESCHREIBUNG

Ausführungsformen der Erfindung umfassen eine Vorrichtung, die als Komponente eines Netzwerks in der Lage ist, auf einem ersten Kanal eine Bitsequenz, hier auch als Telegramm bezeichnet, zu senden. Die Vorrichtung ist ferner eingerichtet, den Sendevorgang zu unterbrechen und zu prüfen, ob auf einem zweiten Kanal Bits empfangen werden. Zu diesem Zweck unterbricht die Vorrichtung den Sendevorgang, um den zweiten Kanal zu prüfen. Es entsteht eine zeitliche Lücke in der Übertragung. Diese Lücke entsteht aufgrund der Unterbrechung. Die Unterbrechungen können in regelmäßigen Abständen vorgenommen werden. Die Bitsequenz enthält eine vorangestellte Eingangssequenz, hier auch als Präambel bezeichnet, die aus einer Erkennungsbitfolge und gegebenenfalls aus mehreren gleich langen Blöcken besteht. Diese Blöcke gleichen sich bis auf einen Zählwert, der mit jedem Block dekrementiert wird. Nach einer Unterbrechung wird der Sendevorgang unter Weglassen derjenigen Blöcke fortgesetzt, die während der Unterbrechung fällig gewesen wären, so dass das zeitliche Ende der Übertragung von der Unterbrechung unberührt bleibt und sich nicht verschiebt. In einem alternativen Beispiel, das nicht unter die Erfindung fällt, werden die während der Unterbrechung fälligen Blöcke nach Unterbrechungsende gesendet; nur in diesem Fall verlängert sich die Gesamtdauer der Übertragung der Bitsequenz um die Summe aller Unterbrechungsdauern.

Jeder der regelmäßigen Abstände wird so bemessen, dass er kleiner ist als die Übertragungsdauer einer eintreffenden Bitsequenz auf dem zweiten Kanal. Dies ist insbesondere dann sinnvoll, wenn der zweite Kanal mit konstanter Datenrate betrieben wird und die minimale Länge und/oder die Übertragungsdauer eintreffender Bitsequenzen vorbekannt ist, beispielsweise weil Telegramme auf dem zweiten Kanal immer eine Präambel der gleichen Länge aufweisen. Auf diese Weise garantiert die Erfindung, dass Bitsequenzen auf dem zweiten Kanal selbst im ungünstigsten Fall erkannt werden, beispielsweise wenn die Präambel des eingehenden Telegramms unmittelbar nach dem Prüfen des zweiten Kanals eintrifft. Die Präambel wird auf diese Weise bis zur nächsten Unterbrechung reichen und dann erkannt werden.

Die bereits erwähnten Eingangssequenzen beziehungsweise Präambeln kündigen Datenpakete durch Teilsequenzen beziehungsweise Blöcke an, die sich unverändert oder mit geringen Veränderungen wiederholen. Beispielsweise kann jede solcher Teilsequenzen Adressen von Sender und Empfänger(n) angeben sowie die Länge des anstehenden Datenpakets eines Telegramms. Vorzugsweise kann jede solcher Teilsequenzen oder Blöcke auch die eigene Länge angeben sowie einen Zähler, der die Anzahl verbleibender Wiederholungen der Teilsequenz angibt bis zum Erscheinen des Datenpakets. Alternativ zu einem solchen Zähler kann auch die konkrete Anzahl an Bits oder auch ein Zeitpunkt des Beginns der Übertragung des Datenpakets enthalten sein. Die Teilsequenzen können direkt aufeinander folgen; alternativ kann jeweils ein zeitlicher Abstand zwischen aufeinanderfolgenden Teilsequenzen vorgesehen sein. Vorzugsweise unterscheiden sich die Präambeln unterschiedlich schneller Kanäle in ihrer Länge. In bestimmten Ausführungsformen sind Kanäle mit kürzeren Präambeln bereits aus diesem Grund schneller als andere.

Erkennt die Vorrichtung beim Prüfen des zweiten Kanals, dass eine Präambel gesendet wird, kehrt sie nicht sofort zu dem Sendevorgang zurück, sondern liest das Signal auf dem zweiten Kanal zunächst, bis ein laufender Block beendet ist und ein nächster Block eintrifft; der Beginn eines Blocks kann anhand einer vordefinierten Bitfolge erkannt werden. Anschließend liest die Vorrichtung den Inhalt des empfangenen Blocks. Anschließend kehrt die Vorrichtung auf den ersten Kanal zurück und fährt mit der Übertragung der ersten Bitsequenz fort. In Beispielen, die nicht unter die Erfindung fallen, kann die Übertragung je mit dem ursprünglich anstehenden Block fortgesetzt werden. Erfindungsgemäß wird die Übertragung mit dem nach der Unterbrechung fälligen Block fortgesetzt. Im letzteren Fall werden zwischenzeitliche Blöcke ausgelassen und verworfen.

Der zweite Kanal, der hier zum Empfang dient, wird mit einer höheren Datenrate betrieben als der erste Kanal. Die Vorrichtung bestimmt die zeitlichen Abstände zwischen aufeinanderfolgenden Unterbrechungen beziehungsweise Lücken derart, dass das Empfangen eines Blocks auf dem zweiten Kanal bei vorgegebener Bitlänge des Blocks sowie vorgegebener Datenrate des zweiten Kanals mindestens so lange dauert wie jeder der zeitlichen Abstände. Zusätzlich oder alternativ wird der Abstand so bemessen, dass er zur Übertragung einer Anzahl vollständiger Blöcke der Bitsequenz auf dem ersten Kanal ausreicht. Die zeitliche Dauer der Unterbrechung hingegen ist so bemessen, dass bei gegebener Datenrate des zweiten Kanals eine vorbestimmte Anzahl von Bits auf dem zweiten Kanal gelesen werden kann. Diese vorbestimmte Anzahl entspricht beispielsweise derjenigen Anzahl von Bits, die nötig sind, um eine Präambel auf dem zweiten Kanal zu detektieren. In anderen Ausführungsformen kann die zeitliche Dauer auf einen vorgegebenen Wert, beispielsweise 4ms, festgelegt werden. In einer weiteren Ausführungsform ist die zeitliche Dauer so bemessen, dass eine bestimmte Anzahl zweiter Kanäle geprüft werden und Präambeln erkannt werden können.

Die Anzahl der Bits und damit die Übertragungsdauer der eintreffenden Präambeln ist vorzugsweise immer gleich, und ist entweder aus dem zugrundeliegenden Übertragungsprotokoll bekannt oder wird aus Erfahrungswerten ermittelt. In einer Ausführungsform kann die Bitanzahl der Präambeln durch die Vorrichtung an andere Teilnehmer des Netzwerks kommuniziert werden, so dass diese Teilnehmer in die Lage versetzt werden, zu versendende Präambeln entsprechend zu konfigurieren. Ausführungsformen der Erfindung umfassen somit auch Vorrichtungen, die eine derartige Mitteilung erhalten und prüfen, ob sie auf eine geforderte minimale Bitlänge oder der Übertragungsdauer eingehen. Beispielsweise kann eine solche Vorrichtung entscheiden, ihre Bitlänge an die geforderte minimale Bitlänge lediglich dann anzupassen, wenn die mitteilende Vorrichtung zu den Adressaten einer Präambel gehört.

In einschlägigen Netzwerken sind Daten, die von einem Teilnehmer gesendet werden, für jeden anderen Teilnehmer sichtbar. Die Teilnehmer überwachen daher fortlaufend oder auch sporadisch den Netzwerkbus, um Daten, die an sie gerichtet sind, zu erfassen. Zu diesem Zweck können Teilnehmer eingerichtet sein, bei geringer Aktivität einen Schlafzustand einzunehmen und diesen in bestimmten Intervallen zu verlassen, um ihre Kanäle auf Datensendungen zu prüfen. Bei Anwendung der obigen Ausführungsformen kann ein Teilnehmer eine solche Prüfung zu einem Zeitpunkt vornehmen, an dem eine sendende Vorrichtung eine gegenwärtige Übertragung unterbricht. Um zu verhindern, dass aufeinanderfolgende Versuche eines Teilnehmers in Unterbrechungslücken treffen, sind verschiedene Maßnahmen vorgesehen. In einer Ausführungsform kann die sendende Vorrichtung die Unterbrechungen in Abständen vornehmen, die sich von den genannten Intervallen unterscheiden. Insbesondere sind die Abstände kein ganzzahliges Vielfaches der Intervalle, und umgekehert. In einer weiteren Ausführungsform kann die sendende Vorrichtung die Position der Unterbrechungen laufend variieren, beispielsweise anhand zufällig generierter Werte, deren Maximum bei der erwarteten Länge der Bitsequenzen liegt, die auf dem zweiten Kanal übertragen werden. Da die Intervalle der anderen Teilnehmer zum Verlassen von Schlafzuständen gleich bleiben, wird in diesen Ausführungsformen gewährleistet, dass spätestens die zweite Prüfung eines solchen Teilnehmers auf Empfangsdaten erfolgreich verläuft. In einer weiteren Ausführungsform erfolgt die Anpassung unter umgekehrten Vorzeichen: Die sendende Vorrichtung bleibt bei äquidistanten Unterbrechungslücken, während andere Teilnehmer ihre Intervalle ändern, indem entweder zufällig und innerhalb der ursprünglichen Intervalle gewählt werden, oder indem die ursprünglichen Intervalle mit jedem Intervallende dekrementiert werden, bis ein vorgegebenes minimales Intervall erreicht wird. In der Folge kann das Intervall mit jedem Intervallende wieder inkrementiert werden, bis das ursprüngliche Intervall erreicht ist.

Die Erfindung ermöglicht somit das Versenden von Telegrammen auf Kanälen mit geringer Datenrate und stellt gleichzeitig sicher, dass auf parallelen Kanälen eintreffende Telegramme zuverlässig erkannt werden.

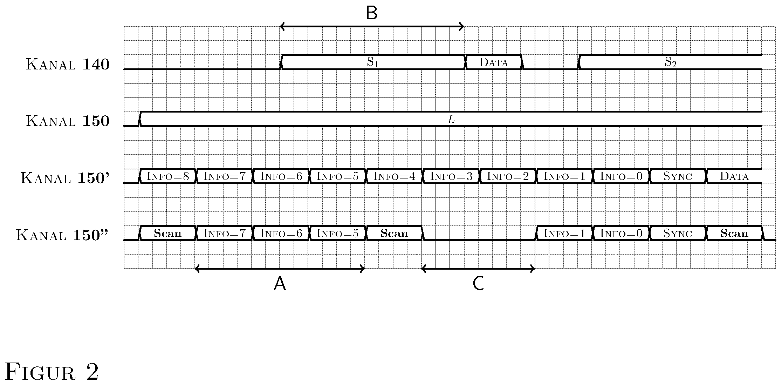

Figur 2 enthält mehrere Impulsdiagramme zur Visualisierung von Datenverkehr auf mehreren Kanälen. Die gezeigten Kanäle 140 und 150 werden parallel und unabhängig voneinander betrieben und weisen unterschiedliche Übertragungsraten auf. Beispielsweise kann die Datenrate von Kanal 140 durch eine oder mehrere Vorrichtungen höher sein als die von Kanal 150. In dem gezeigten Fall werden auf Kanal 140 nacheinander mehrere Telegramme gleicher Länge und somit gleicher Übertragungsdauer B übertragen. Auf Kanal 150 wird parallel von einer weiteren Vorrichtung ein einzelnes Telegramm übertragen, dessen Übertragungsdauer größer ist als das der Übertragungsdauer B; dies kann beispielsweise aus der geringeren Datenrate von Kanal 150 oder aus einer größeren Anzahl von Bits des Telegramms auf Kanal 150 resultieren. Insbesondere können sich die Kanäle 140 und 150 dadurch unterscheiden, dass die Präambeln der auf Kanal 150 übertragenen Telegramme länger sind als die Präambeln der Telegramme auf Kanal 140.

Die auf Kanal 150 übertragenen Daten sind als ein einzelnes Telegramm gezeigt. Dieses enthält in einschlägigen Standards, beispielsweise in KNX-RF, neben einer Präambel ein Synchronisationsfeld SYNC sowie Nutzdaten DATA. In Figur 2 ist das einzelne Telegramm auf Kanal 150' in Blöcke unterteilt dargestellt. Die mit INFO bezeichneten Blöcke weisen Bitsequenzen der gleichen Länge auf. Jeder dieser Blöcke stellt eine Teilsequenz dar, die in jedem Block identisch oder mit geringer Anpassung wiederholt wird; so können aufeinanderfolgende Blöcke beispielsweise eine Positionsangabe enthalten, die hier mit INFO=N angedeutet ist. Die mit SYNC und DATA bezeichneten Blöcke können eine andere Länge aufweisen als die Info-Blöcke. In einem Beispiel enthält jeder Info-Block eine vordefinierte Folge von Bits, auch als Chips bezeichnet, gefolgt von zwei Adressfeldern Doa und GA sowie einer Informationseinheit, die die Anzahl der nachfolgenden Info-Blöcke bis zur SYNC-Sequenz bezeichnet. Alle Info-Blöcke weisen die gleiche Anzahl von Bits auf.

Die auf den Kanälen 140 und 150 gezeigten Datenübertragungen zeigen, dass eine Vorrichtung, die ein längeres Telegramm sendet beziehungsweise auf einem langsameren Kanal sendet, Gefahr läuft, Daten zu verpassen, die zeitgleich auf einem anderen Kanal, hier Kanal 140, gesendet werden. Teilnehmer einschlägiger Netzwerke sind nicht in der Lage, gleichzeitig zu senden und zu empfangen; daher können Daten, die während eines Sendevorgangs auf einem parallelen Kanal übertragen werden, von der sendenden Vorrichtung nicht empfangen werden. Der Verlust solcher Daten ist insbesondere dann hoch, wenn eine Vorrichtung auf einem langsamen Kanal sendet und somit einen parallelen schnellen Kanal für längere Zeit nicht überwachen kann.

Kanal 150" zeigt ein erfindungsgemäßes Ausführungsbeispiel, in dem die Übertragung des Telegramms in regelmäßigen Abständen A ausgesetzt wird. Die Zeitpunkte dieser Unterbrechungen sind in Kanal 150" durch "Scan"-Blöcke gekennzeichnet. Während dieser Blöcke werden auf dem Kanal 150" keine Daten übertragen. Stattdessen schaltet die übertragende Vorrichtung auf den Kanal 140 und überprüft, ob auf diesem Bits gesendet werden. Die Dauer dieses Scan-Vorgangs ist standardmäßig immer gleich lang und beträgt beispielsweise 4ms. Der Scan-Vorgang wird vorteilhafterweise in regelmäßigen Abständen A durchgeführt, wobei der Abstand A zwischen aufeinanderfolgenden Scan-Vorgängen so bemessen ist, dass eine vorbestimmte Anzahl von Info-Blöcken vollständig übertragen wird. Auf diese Weise gewährleistet die Erfindung, dass ein etwaiger Empfänger des Telegramms auf Kanal 150" trotz der wiederholten Aussetzung des Telegramms vollständige Adress- und Informationsdaten erhält und anhand dieser abschätzen kann, ob und wieviele Info-Blöcke in der laufenden Präambel noch übertragen werden.

Zudem ist der Abstand A zwischen aufeinanderfolgenden Prüfungen von kürzerer Dauer als die Übertragungsdauer der Präambeln der Telegramme, die auf Kanal 140 gesendet werden.

Figur 2 veranschaulicht nicht die Längen der Bitsequenzen, sondern die Dauer von deren Übertragung in dem jeweiligen Kanal. Die Übertragungsdauer der Päambel eines Telegramms auf Kanal 140 ist in Figur 2 als Dauer B gekennzeichnet. Der zeitliche Abstand A zwischen aufeinanderfolgenden Scan-Vorgängen ist kleiner als die Übertragungsdauer B der Präambeln der Telegramme auf Kanal 140. Die Erfindung gewährleistet auf diese Weise, dass die Aussetzungen in Kanal 150" gerade so häufig sind, dass keine Präambel, und somit kein Telegramm auf Kanal 140 übersehen werden kann.

Figur 2 veranschaulicht in Kanal 150" einen ersten Scan-Vorgang, der ergebnislos verläuft, da auf Kanal 140 zu diesem Zeitpunkt keine Daten übertragen werden. Auf Kanal 150" werden nachfolgend beispielhaft drei Info-Blöcke versendet, gefolgt von einem erneuten Scan. Parallel zu den Info-Blöcken 8, 7 und 6 wird jedoch auf Kanal 140 ein Telegramm S1 übertragen, das für die Vorrichtung, die auf Kanal 150" sendet, zunächst unentdeckt bleibt. Durch den nachfolgenden Scan erkennt diese Vorrichtung noch einen Teil der Präambel des Telegramms S1. In einer besonders vorteilhaften Ausführungsform ist der Abstand A zwischen aufeinanderfolgenden Scans exakt so groß, dass selbst im ungünstigsten Fall - Telegramm S1 startet unmittelbar nach Beendigung eines ersten Scans - noch die Präambel des Telegramms erkannt werden kann. Die Vorrichtung ermittelt zur Festsetzung des Scan-Abstands also die Datenrate des Kanals 140, die Anzahl der Bits einer Präambel eines Telegramms und die Übertragungsdauer für die Präambel. Diese Übertragungsdauer wird als maximaler Wert für den Abstand A verwendet. Auf diese Weise stellt die Erfindung sicher, dass kein Telegramm auf Kanal 140 verloren geht.

Die in Figur 2 gezeigte Ausführungsform veranschaulicht mit einer zeitlichen Dauer C den zeitlichen Aufwand zum Einlesen des Telegramms S1 auf Kanal 140. Um diese Dauer verlängert sich die Unterbrechung zum Übertragen des Telegramms L auf Kanal 150". Jedoch bleibt die Dauer zur gesamten Übertragung von der längeren Unterbrechung in der gezeigten Ausführungsform unberührt, da die während der Unterbrechungen anfallenden Blöcke ausgelassen werden.

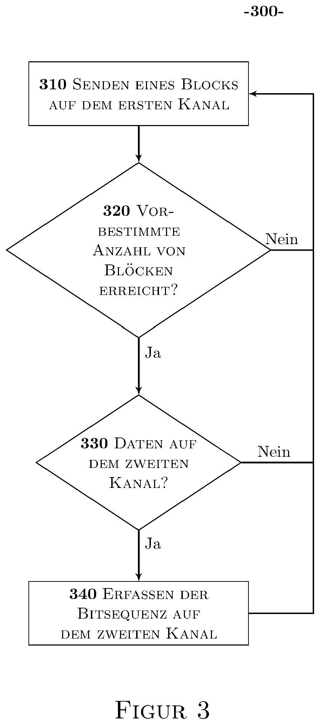

Figur 3 zeigt ein Verfahren 300 zur Durchführung von Ausführungsformen der Erfindung. Das Verfahren 300 wird vorzugsweise durch eine Vorrichtung ausgeführt, die an eines der hier beschriebenen Gebäudenetzwerke angeschlossen ist. Die Vorrichtung kann Daten auf einem oder mehreren Kanälen mit unterschiedlichen Datenraten übertragen.

Die Vorrichtung überträgt bei 310 Daten auf einem ersten Kanal, der eine geringere Datenübertragungsrate aufweist als ein zweiter Kanal. Nach Übertragen eines Telegrammblocks prüft die Vorrichtung bei 320, ob mit dem Übertragen des Blocks eine vorbestimmte Anzahl von Blöcken zwischen aufeinanderfolgenden Scans erreicht wurde. Wie oben beschrieben, entspricht die Übertragungsdauer dieser vorbestimmten Anzahl von Blocks auf dem ersten Kanal höchstens einer Dauer, die erforderlich ist, um auf dem zweiten Kanal bei Berücksichtigung von dessen Übertragungsrate eine vollständige Präambel eines vollständigen Telegramms zu übertragen.

Ergibt die Prüfung bei 320, dass die vorbestimmte Anzahl nicht erreicht wurde, wird bei 310 ein weiterer Block übertragen. Ergibt die Prüfung bei 320, dass die vorbestimmte Anzahl erreicht wurde, wird bei 330 geprüft, ob auf dem zweiten Kanal Daten übertragen werden. Die Übertragung von Blöcken auf dem ersten Kanal wird für die Dauer dieser Prüfung ausgesetzt. Liegen auf dem zweiten Kanal keine Daten vor, so fährt das Verfahren bei 310 mit der Übertragung von Blöcken fort; die Zählung von Blöcken bis zum nächsten Scan beginnt erneut.

Werden auf dem zweiten Kanal jedoch Daten übertragen, erfasst das Verfahren diese bei 340. Die Übertragung von Daten auf dem ersten Kanal wird weiter ausgesetzt. Anschließend kehrt das Verfahren zu 310 zurück und setzt die Übertragung von Daten auf dem ersten Kanal fort, bis das Telegramm vollständig übertragen wurde.

Die hier beschriebene Vorrichtung arbeitet somit in einem von zwei Modi: In einem ersten Modus überträgt sie Daten auf einem ersten Kanal, in einem zweiten Modus empfängt sie Daten auf einem zweiten Kanal. Mit der Prüfung bei 330 schaltet die Vorrichtung gegebenenfalls aus dem ersten Modus in den zweiten Modus. Nach Ablauf von 340 schaltet sie zurück in den ersten Modus.

Die beschriebenen Ausführungsformen ermöglichen einer Vorrichtung die zuverlässige Erkennung von Daten, die auf einem schnelleren Kanal gesendet werden, während die Vorrichtung auf einem langsameren Kanal andere Daten sendet. Die Erfindung schaltet hierzu regelmäßig auf den zweiten Kanal und minimiert das hierzu erforderliche Aussetzen seiner eigenen Übertragung. Bestimmte Ausführungsformen machen sich die überraschende Erkenntnis zunutze, dass anhand vorbekannter Übertragungsdauern und Telegrammlängen sowie der Kenntnis der Struktur der Telegramme zuverlässig abgeschätzt werden kann, wie groß der Abstand zwischen Kanalprüfungen höchstens sein darf, um Telegramme auf schnelleren Kanälen zu erkennen.

Weitere Ausführungsformen der Erfindung betreffen eine zweite Vorrichtung, die die von der ersten Vorrichtung auf Kanal 150" übertragenen Daten empfängt. Die zweite Vorrichtung ist eingerichtet, in einen Schlafzustand einzutreten, um Energie zu sparen. Dies kann beispielsweise erfolgen, wenn auf einem von der Vorrichtung überwachten Kanal für bestimmte Zeit keine Daten übertragen wurden. In regelmäßigen Abständen erwacht die zweite Vorrichtung aus dem Schlafzustand und prüft, ob auf Kanal 150" Daten übertragen werden. Durch die oben beschriebenen Ausführungsformen kann die zweite Vorrichtung den Kanal 150" zu einem Zeitpunkt prüfen, in dem die erste Vorrichtung zwar im Begriff ist, ein Telegramm zu senden, die Übertragung dieses Telegramms jedoch ausgesetzt hat, um ihrerseits Kanal 140 auf Daten zu prüfen. Um zu verhindern, dass die zweite Vorrichtung das Telegramm der ersten Vorrichtung versäumt, werden verschiedene Lösungen vorgeschlagen.

In einer Ausführungsform wird die zweite Vorrichtung so konfiguriert, dass die Dauer des Schlafzustands kein ganzzahliges Vielfaches desjenigen Abstands ist, in dem die erste Vorrichtung den Empfangskanal prüft, und dass die Dauer des Abstands kein ganzzahliges Vielfaches der Dauer des Schlafzustands ist. Auf diese Weise wird die Wahrscheinlichkeit minimiert, dass die zweite Vorrichtung nach einer Prüfung während ausgesetzter Datenübertragung der ersten Vorrichtung nicht erneut während einer solchen Aussetzung prüft; die Wahrscheinlichkeit besteht allenfalls dann, wenn die erste Vorrichtung die Aussetzung bei 340 verlängert. Die zweite Vorrichtung kann entsprechend konfiguriert werden beispielsweise durch Programmierung eines Administrators oder alternativ durch Austausch entsprechender Angaben mit der ersten Vorrichtung.

Durch diese Ausführungsformen wird die Wahrscheinlichkeit minimiert, dass die zweite Vorrichtung mehr als einmal während der Aussetzung der Übertragung durch die erste Vorrichtung den Kanal vergeblich prüft.

## Patentansprüche

1. Vorrichtung, umfassend:
einen Transceiver, der eingerichtet ist, in einem ersten Modus auf einem ersten Übertragungskanal (150, 150', 150") eine erste Bitsequenz mit einer ersten Übertragungsdauer zu senden und in einem zweiten Modus auf einem zweiten Übertragungskanal (140) eine oder mehrere zweite Bitsequenzen einer zweiten Übertragungsdauer zu empfangen, wobei die erste Bitsequenz mit einer Erkennungsbitfolge und mehreren gleich langen Blöcken beginnt, die je einen Zählwert enthalten, der mit jedem Block dekrementiert wird;
wobei der Transceiver ferner eingerichtet ist, das Senden der ersten Bitsequenz in dem ersten Modus in regelmäßigem Abstand zu unterbrechen und jeweils in den zweiten Modus zu schalten und in dem zweiten Modus zu prüfen, ob auf dem zweiten Übertragungskanal eine zweite Bitsequenz übertragen wird;
wobei der Abstand zwischen zwei aufeinanderfolgenden Unterbrechungen kleiner ist als die zweite Übertragungsdauer; und
wobei die Vorrichtung, falls auf dem zweiten Übertragungskanal (140) eine zweite Bitsequenz übertragen wird, diese vollständig liest und anschließend mit dem Senden der ersten Bitsequenz auf dem ersten Übertragungskanal (150, 150', 150") unter Weglassen zwischenzeitlicher Blöcke der ersten Bitsequenz fortfährt.

2. Vorrichtung nach Anspruch 1, wobei die erste Übertragungsdauer größer ist als die zweite Übertragungsdauer.

3. Vorrichtung nach Anspruch 1 oder 2, wobei der erste Übertragungskanal (150, 150', 150") Daten mit einer geringeren Datenrate überträgt als der zweite Übertragungskanal (140).

4. Vorrichtung nach Anspruch 1 oder 2, wobei auch die zweite Bitsequenz mit einer Erkennungsbitfolge und mehreren gleich langen Blöcken beginnt, die je einen Zählwert enthalten, der mit jedem Block dekrementiert wird, wobei die Gesamtheit aus Erkennungsbitfolge und Blöcken der ersten Bitfolge länger ist als die der zweiten Bitsequenz.

5. System, umfassend:
einen ersten und einen zweiten Übertragungskanal (140, 150, 150', 150"), sowie eine Vorrichtung nach einem der Ansprüche 1 bis 4.

6. System nach Anspruch 5, ferner umfassend eine zweite Vorrichtung, die eingerichtet ist, nach Ablauf eines vorgegebenen Intervalls einen Schlafzustand zu verlassen und zu prüfen, ob auf dem ersten Übertragungskanal (140) eine Bitsequenz übertragen wird.

7. System nach Anspruch 6, wobei das Intervall nach jedem Ablauf neu bestimmt wird durch wiederholtes Dekrementieren oder Inkrementieren des jeweils aktuellen Intervalls in einem Wertebereich zwischen einem vorbestimmten Minimum und dem regelmäßigen Abstand.

8. Verfahren, umfassend:
Senden (310), durch einen Transceiver, einer ersten Bitsequenz mit einer ersten Übertragungsdauer in einem ersten Modus auf einem ersten Übertragungskanal, wobei die erste Bitsequenz mit einer Erkennungsbitfolge und mehreren gleich langen Blöcken beginnt, die je einen Zählwert enthalten, der mit jedem Block dekrementiert wird; und
Empfangen (340), durch den Transceiver, einer oder mehrerer Bitsequenzen mit einer zweiten Übertragungsdauer in einem zweiten Modus auf einem zweiten Übertragungskanal (140);
wobei der Transceiver das Senden der ersten Bitsequenz in dem ersten Modus in regelmäßigem Abstand unterbricht und jeweils in den zweiten Modus schaltet und in dem zweiten Modus prüft, ob auf dem zweiten Übertragungskanal (140) eine zweite Bitsequenz übertragen wird; und
wobei der Abstand zwischen zwei aufeinanderfolgenden Unterbrechungen kleiner ist als die zweite Übertragungsdauer;
wobei der Transceiver, falls auf dem zweiten Übertragungskanal (140) eine zweite Bitsequenz übertragen wird, diese vollständig liest und anschließend mit dem Senden der ersten Bitsequenz auf dem ersten Übertragungskanal (150, 150', 150") unter Weglassen derjenigen Blöcke fortfährt, die während der Unterbrechung fällig gewesen wären.

## Claims

1. A device comprising:
a transceiver arranged to transmit in a first mode on a first transmission channel (150, 150', 150") a first bit sequence having a first transmission duration and to receive in a second mode on a second transmission channel (140) one or more second bit sequences having a second transmission duration, the first bit sequence starting with a recognition bit sequence and a plurality of blocks of equal length each containing a count value decremented with each block;
wherein the transceiver is further arranged to interrupt the transmission of the first bit sequence in the first mode at regular intervals and to switch to the second mode in each case and to check in the second mode whether a second bit sequence is transmitted on the second transmission channel;
wherein the interval between two successive interruptions is less than the second transmission duration; and
wherein, if a second bit sequence is transmitted on the second transmission channel (140), the device reads the second bit sequence completely and then continues to transmit the first bit sequence on the first transmission channel (150, 150', 150"), omitting intermediate blocks of the first bit sequence.

2. The device of claim 1, wherein the first transmission duration is greater than the second transmission duration.

3. The device according to claim 1 or 2, wherein the first transmission channel (150, 150', 150") transmits data at a lower data rate than the second transmission channel (140).

4. The device according to claim 1 or 2, wherein also the second bit sequence starts with a recognition bit sequence and several blocks of equal length, each containing a count value which is decremented with each block, wherein the totality of recognition bit sequence and blocks of the first bit sequence is longer than that of the second bit sequence.

5. A system, comprising:
a first and a second transmission channel (140, 150, 150', 150"), and a device according to any one of claims 1 to 4.

6. The system of claim 5, further comprising a second device configured to exit a sleep state after a predetermined interval has elapsed and to check whether a bit sequence is transmitted on the first transmission channel (140).

7. The system according to claim 6, wherein the interval is newly determined after each expiration by repeatedly decrementing or incrementing the respective current interval in a value range between a predetermined minimum and the regular interval.

8. A method, comprising:
Transmitting (310), by a transceiver, a first bit sequence having a first transmission duration in a first mode on a first transmission channel, the first bit sequence beginning with a recognition bit sequence and a plurality of equal-length blocks each containing a count value that is decremented with each block; and
Receiving (340), by the transceiver, one or more bit sequences having a second transmission duration in a second mode on a second transmission channel (140);
wherein the transceiver interrupts the transmission of the first bit sequence in the first mode at regular intervals and switches to the second mode each time and checks in the second mode whether a second bit sequence is transmitted on the second transmission channel (140); and
wherein the interval between two successive interruptions is less than the second transmission duration;
wherein, if a second bit sequence is transmitted on the second transmission channel (140), the transceiver reads it completely and then continues to transmit the first bit sequence on the first transmission channel (150, 150', 150"), omitting those blocks which would have been due during the interruption.

## Revendications

1. Dispositif comprenant :
un émetteur-récepteur qui est conçu pour envoyer, dans un premier mode, sur un premier canal de transmission (150, 150', 150"), une première séquence de bits avec une première durée de transmission et pour recevoir, dans un deuxième mode, sur un deuxième canal de transmission (140), une ou plusieurs séquences de bits d'une deuxième durée de transmission, dans lequel la première séquence de bits commence par une suite de bits d'identification et plusieurs blocs de même longueur, qui contiennent chacun une valeur de comptage décrémentée avec chaque bloc ;
dans lequel l'émetteur-récepteur est en outre conçu pour interrompre l'émission de la première séquence de bits dans le premier mode à une distance régulière et pour passer dans le deuxième mode et pour vérifier, dans le deuxième mode, si une deuxième séquence de bits est transmise sur le deuxième canal de transmission ;
dans lequel la distance entre deux interruptions successives est inférieure à la deuxième durée de transmission ; et
dans lequel le dispositif, dans le cas où une deuxième séquence de bits est transmise sur le deuxième canal de transmission (140), lit celle-ci entièrement puis continue l'émission de la première séquence de bits sur le premier canal de transmission (150, 150', 150") en omettant les blocs intermédiaires de la première séquence de bits.

2. Dispositif selon la revendication 1, dans lequel la première durée de transmission est supérieure à la deuxième durée de transmission.

3. Dispositif selon la revendication 1 ou 2, dans lequel le premier canal de transmission (150, 150', 150") transmet des données avec un débit plus faible que le deuxième canal de transmission (140).

4. Dispositif selon la revendication 1 ou 2, dans lequel la deuxième séquence de bits commence également avec une suite de bits d'identification et plusieurs blocs de même longueur, qui contiennent chacun une valeur de comptage qui est décrémentée avec chaque bloc, dans lequel l'ensemble constitué de la suite de bits d'identification et des blocs de la première suite de bits est plus long que celui de la deuxième séquence de bits.

5. Système comprenant :
un premier et un deuxième canaux de transmission (140, 150, 150', 150") ainsi qu'un dispositif selon l'une des revendications 1 à 4.

6. Système selon la revendication 5, comprenant en outre un deuxième dispositif qui est conçu pour sortir d'un état de sommeil avec l'écoulement d'un intervalle prédéterminé et pour vérifier si une séquence de bits est transmise sur le premier canal de transmission (140).

7. Système selon la revendication 6, dans lequel l'intervalle est déterminé après chaque processus par la décrémentation ou l'incrémentation répétée de l'intervalle actuel dans une plage de valeurs entre un minimum prédéterminé et la distance régulière.

8. Procédé comprenant :
l'émission (310), par un émetteur-récepteur, d'une première séquence de bits avec une première durée de transmission dans un premier mode sur un premier canal de transmission, dans lequel la première séquence de bits commence par une suite de bits d'identification et plusieurs blocs de même longueur, qui contiennent chacun une valeur de comptage, qui est décrémentée avec chaque bloc ; et
la réception (340), par l'émetteur-récepteur, d'une ou plusieurs séquences de bits avec une deuxième durée de transmission dans un deuxième mode sur un deuxième canal de transmission (140) ;
dans lequel l'émetteur-récepteur interrompt l'émission de la première séquence de bits dans le premier mode à une distance régulière et passe dans le deuxième mode et vérifie, dans le deuxième mode, si une deuxième séquence de bits est transmise sur le deuxième canal de transmission (140) ; et
dans lequel la distance entre deux interruptions successives est inférieure à la deuxième durée de transmission ;
dans lequel l'émetteur-récepteur, dans le cas où une deuxième séquence de bits est transmise sur le deuxième canal de transmission (140), lit celle-ci entièrement puis continue l'émission de la première séquence de bits sur le premier canal de transmission (150, 150', 150") en omettant les blocs qui seraient arrivés à échéance pendant l'interruption.
